# EUROPEAN PATENT APPLICATION

(11) **EP 1 193 538 A2**
(43) Date of publication of application: **03.04.2002**
(21) Application number: 01122624.8
(22) Date of filing: 27.09.2001
(51) Int. Cl.: G02F 1/1333

(54) **Liquid crystal display and method of manufacturing the same**

(30) Priority: 27.09.2000 JP 2000293622
(71) Applicant: Kabushiki Kaisha Toshiba, Tokyo 105-8001 (JP)
(72) Inventor: Nakai, Yutaka, Minato-ku, Tokyo (JP); Kizaki, Yukio, Minato-ku, Tokyo (JP); Enomoto, Shintaro, Minato-ku, Tokyo (JP); Tanaka, Masao, Minato-ku, Tokyo (JP)
(74) Representative: HOFFMANN - EITLE

(57) **Abstract**

There are provided a liquid crystal display having high light utilizing efficiency, simple structure and high aperture ratio and its manufacturing method. A pixel isolator surrounding respective pixel is formed on a substrate to thereby isolate the respective pixel. A liquid crystal layer is formed by dripping liquid crystal microcapsule. Thereby, byisolating respective pixel, the pixel can be driven without being influenced by voltage applied to contiguous pixels. Further, since the respective pixel is partitioned, the liquid crystal layer and electrodes can be coated accurately.

## Description

### BACKGROUND OF THE INVENTION

### 1. Field of the Invention

The present invention relates to a liquid crystal display and a method of manufacturing the same.

### 2. Discussion of the Background

In recent years, there have intensively been carried out development of new displays substituting for CRT which has been used conventionally. Among them, a liquid crystal display is highly expected in the market of household electric appliance and OA apparatus since the liquid crystal display is thin and can be operated by low power.

As liquid crystal displays, there are a transmission type liquid crystal display installed with a planer type illumination referred to as backlight at a back face of a liquid crystal panel and a reflection type liquid crystal display installed with a reflecting plate for reflecting light at a back face of a liquid crystal panel for displaying by reflecting outside light to a display face . Further, these liquid crystal displays are not only available as a monochromatic display but also as a colored liquid crystal display.

As a method of realizing a colored liquid crystal display, there is an electrically controlled birefringence (ECB) system in which wavelength of transmitted or reflected light differs by applied voltage, however, there exists the problem that a displayable color range is narrow. There also is a system of planely arranging color filters of red, green and blue and using liquid crystal as an optical shutter in order to achieve color reproducing performance. However, according to the system, three primary color portions must be provided for one pixel since the system is constituted by additive color mixture . That is, only one third of the total area can be used for display and there exists the problem that a display screen is darkened.

There is a method of using subtractive color mixture by a structure laminated with three layers of cyan, magenta and yellow in a thickness direction as liquid crystal layers in order to promote light utilizing efficiency (for example, Japanese Patent Laid-Open No. 337643/1994 or Japanese Patent Laid-Open No. 313939/1996). According to the method, voltage is applied to liquid crystal layers of respective pixel respectively independently from each other to thereby carry out display.

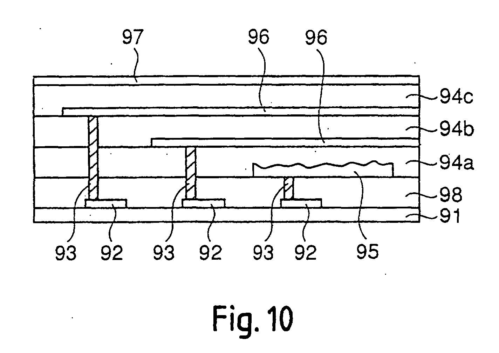

In Japanese Patent Laid-Open No. 313939/1996, an explanation is given of to a liquid crystal display shown in Fig. 10. Liquid crystal microcapsule layers 94a, 94b and 94c are laminated above a glass substrate 91. Respective electrodes 95 and 96 are installed among the liquid crystal microcapsule layers. TFTs 92 are installed to respective pixels and connected to the respective electrodes 95 and 96 via copper-plated columns 93.

By such a constitution, voltage can be applied to the liquid crystal microcapsule layers 94a, 94b and 94c of respective colors independently from each other. However, the lengths of the copper-plated columns 93 for connecting the respective electrodes 95 and 96 and TFTs 92 differ from each other and therefore, the number of manufacturing steps becomes extremely large.

That is, according to the example, formation of the liquid crystal microcapsule layers 94a, 94b and 94c of respective colors, patterning the layers, formation of the copper-plated columns 93 and formation of the respective electrodes 95, 96 and 97 are repeatedly carried out. Therefore, the number of steps is extremely high and the structure is also complicated. Therefore, not only the cost is increased but also a reduction in yield is unavoidable.

It is important for increasing an aperture rate to increase the accuracy of positioning the reflective electrode 95 and two layers of the transparent electrodes 96. However, since patterning accuracy of a printing step is poor, it is technically difficult to increase the accuracy of matching the electrodes.

### SUMMARY OF THE INVENTION

The invention provides a liqud crystal display device as described in claims 1 to 17 and a method for manufacturing a liquid crystal display device as set out in claim 18.

### BRIEF DESCRIPTION OF THE DRAWINGS

Fig. 1 is a sectional view explaining a first embodiment of the invention;
Figs. 2A, 2B and 2C are sectional views for explaining a method of manufacturing a liquid crystal display according to a first embodiment of the invention;
Fig. 3 is a plane view of Fig. 2A;
Fig. 4 is a sectional view for explaining a second embodiment;
Fig. 5 is a sectional view for explaining a third embodiment;
Fig. 6 is a sectional view for explaining a fourth embodiment;
Figs. 7A, 7B and 7C are sectional views for explaining a method of manufacturing a liquid crystal display according to a fifth embodiment;
Fig. 8 is a sectional view for explaining a sixth embodiment;
Fig. 9 is a sectional view for explaining a modified example of the sixth embodiment; and
Fig. 10 is a sectional view showing a conventional liquid crystal display.

### DETAILED DESCRIPTION OF THE EMBODIMENTS

A detailed explanation will be given of embodiments of the invention in reference to the drawings as follows . [However, the invention is not limited to the embodiments.] may be omitted in an EP application.

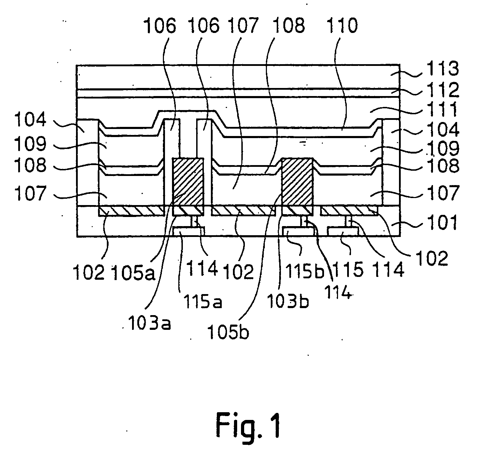

An explanation will be given of a first embodiment of the invention. An explanation will be given of a constitution of one pixel of a liquid crystal display according to the embodiment in reference to a partial sectional view shown in Fig. 1.

According to the liquid crystal display of the embodiment, as shown by Fig. 1, a pixel isolator 104 is provided to surround a pixel above a substrate 101. An insulating material is used for the pixel isolator 104.

Further, a common electrode 112 is provided on a counter substrate 113.

Within the one pixel, a pixel electrode 102 and connection electrodes 103a and 103b are formed above the substrate 101. A conductor column 105a and a conductor column 105b are provided at the connection electrodes 103a and 103b. The connection electrodes 103a and 103b are is insulated from the pixel electrode 102. That is, the connection electrodes 103a and 103b are provided in hollows (holes) of the pixel electrode 102.

The conductor column 105b is electrically connected with a first transparent electrode layer 108. Further, the conductor column 105a is electrically connected with a second transparent electrode layer 110. The conductor column 105a is surrounded by an insulator 106 for insulating from the first transparent electrode layer 108.

A first liquid crystal microcapsule layer 107 is provided between the pixel electrode 102 and the first transparent electrode layer 108. A second liquid crystal microcapsule layer 109 is provided between the first transparent electrode layer 108 and the second transparent electrode layer 110. Further, a third liquid crystal microcapsule layer 111 is provided between the second transparent electrode layer 110 and the common electrode 112.

The pixel electrode 102, the first transparent electrode 108 and the second transparent electrode 110 are respectively connected with switch elements 115 via connecting portions 114. The switch element 115 is provided with a switch function. Further, although not illustrated here, the switch element 115 is connected with a signal line and a scanning line.

By such a pixel structure, potential can be applied to the pixel electrode 102, the first transparent electrode 108, the second transparent electrode 110 and the common electrode 112 independently from each other. Therefore, respectively different voltage can be applied to the first liquid crystal microcapsule layer 107, the second liquid crystal microcapsule layer 109, and the third liquid crystal microcapsule layer 111.

According to the embodiment, the first transparent electrode 108, the second transparent electrode 110, the first liquid crystal microcapsule layer 107, and the second microcapsule layer 109 are surrounded by the pixel isolator 104 for the respective pixel and are accordingly, completely isolated from other pixels.

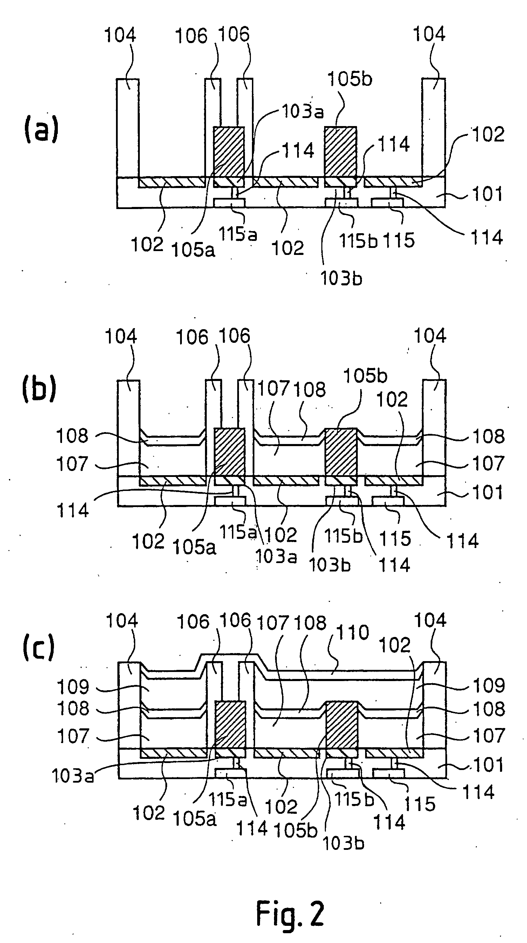

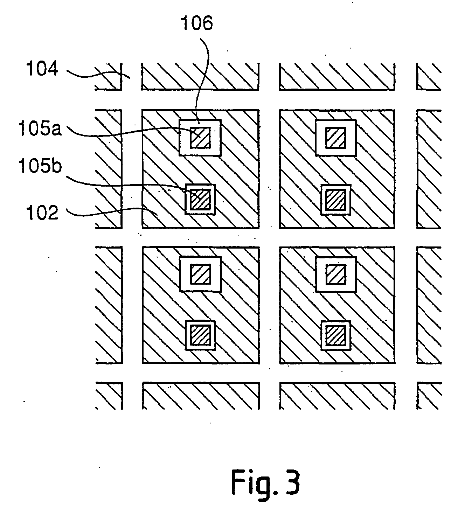

Below, an explanation will be given of a method of manufacturing the liquid crystal display according to the embodiment. Figs. 2A, 2B and 2C are partial sectional views for explaining the manufacturing method according to the embodiment and Fig. 3 is a plane view of Fig. 2A.

First, as shown by Fig. 2A and Fig. 3, the pixel electrode 102 and the connection electrodes 103 i.e. two per pixel are formed above the substrate 101 having insulating characteristics. The pixel electrode 102 and the connection electrodes 103 are formed by using aluminum, silver or an alloy having these as main components. These may be formed of the same material or different materials may be used. The pixel electrode 102 and the connection electrodes 103 are connected to the switch elements 115 arranged at the substrate 101 via the connecting portions 114.

The pixel electrode 102 and the connection electrodes 103a and 103b are connected to the switch elements 115 provided, for example, at the back face of the substrate 101. In this case, an explanation will be given of an example in which the switch elements 115 are formed at the back face of the substrate 101, however, the switch elements 115 can be provided between the substrate 101 and the pixel electrode 102.

Next, the columns of conductors 105a and 105b having a height of about 10 µm are formed above the connection electrodes 103a and 103b by a plating step by using a material like copper, nickel or the like. Also in this case, the columns of conductors 105a and 105b may be constituted by the same material or different materials.

Further, there are formed the insulator 106 surrounding the conductor column 105a and the pixel isolator 104 surrounding thepixel. In this case, the insulator 106 and the pixel isolator 104 are formed to constitute a height of about 20 µm by using a material such as a photosensitive resist. Further, the thicknesses of the insulator 106 and the pixel isolator 104 are about 8 µm. The insulator 106 and the pixel isolator 104 are provided to make the conductor 105a electrically independent. Further, as shown by Fig. 3, the pixel isolator 104 isolates the respective pixel electrically and physically. That is, the pixel isolator 104 is provided between pixels for isolating the pixels. However, when the isolator 106 and the pixel isolator 104 are thickened, the aperture ratio is deteriorated and accordingly, a consideration needs to be given to a balance between the thicknesses of the insulator 106 and the pixel isolator 104 and the aperture ratio.

Next, the liquid crystal layer is formed. An explanation will be given of an example of using a liquid crystal microcapsule.

A liquid crystal microcapsule involves guest host liquid crystals dissolving dichroic dyes in the liquid crystals in a capsule made of resin. The first liquid crystal microcapsule layer 107 is set to cyan, the second microcapsule layer 109 is set to yellow and the third microcapsule layer 111 is set to magenta.

Here, an explanation will be given of a method of forming a liquid crystal microcapsule.

An explanation will be given of a method of forming a liquid crystal microcapsule by taking an example of cyan.

First, there are mixed and dissolved about 80 weight portions of nematic liquid crystals (made by Chisso K.K. Lixon5065xx) having positive dielectric anisotropy, about 2 weight portions of cyan dye (made by Mitsui Kagaku K.K. SI-497), about 7 weight portions of capsule wall material (hydrophilic methylmethacrylate monomer), about 7 weight portions of hydrophobic isobutylmethacrylate, about 1 weight portion of a cross linking agent (ethyleneglycol dimethacrylate) and about 0.2 weight portion of a polymerization initiator (benzoyl peroxide (BPO)).

By using a film emulsifier (made by Ise Kagaku K.K.), the mixture solution is extruded into a flow of an aqueous solution of about 0.3 weight percent of polyvinyl alcohol through a porous glass tube having a mean pore diameter of about 1.4 µm. Thereby, an emulsion having a mean particle size of about 7 µm is prepared.

The emulsion is polymerized at about 85°C for about 1 hour.

After the polymerization, the emulsion is filtrated by a filter having a pore diameter of about 1 µm and cleaned by pure water by about 3 times. Thereby, there is provided the liquid crystal microcapsule of cyan involved by a transparent polymer film. The means particle diameter of the liquid crystal microcapsule is about 7 µm.

Further, when the liquid crystal microcapsule of magenta is formed, about 2 weight portions of magenta dye (made by Nippon Kankosei Shikiso K.K. G-176) may be used in place of cyan dye. Further, when the liquid crystal microcapsule of yellow is formed, about 2 weight portions of yellow dye (made by Mitsubishi Kagaku K.K. LSY-310) may be used in place of the cyan dye.

The liquid crystal microcapsules prepared in this way are dispersed in a solvent to constitute about 30 weight %. Here, there is used a solvent dissolved with about 10 weight % of isopropyl alcohol and about 4 weight % of hydroxyethyl cellulose in water.

The liquid crystal microcapsule of cyan is dripped onto the pixel electrode 102 and baked. Thereby, there is formed the first liquid crystal microcapsule layer 107 having a thickness of about 8 µm. At this occasion, as shown by Fig. 2B, the liquid crystal microcapsule of cyan is dripped avoiding an inner side of the insulator 106 and the conductor column 105b which have previously been formed. Further, an upper portion of the conductor column 105b stays to be exposed.

A method of dripping the liquid crystal microcapsule may be carried out by an ink jet method other than screen printing and is not particularly limited.

Next, the first transparent electrode layer 108 is formed above the first liquid crystal microcapsule layer 107. In this case, water dispersion with small particles of ITO is coated above the first liquid crystal microcapsule layer 107. Also when the first transparent electrode 108 is formed, as shown by Fig. 2B, the inner side of the insulator 106 formed previously is avoided. However, the water is coated above the conductor column 105b to thereby electrically connect the conductor column 105b and the first transparent electrode 108.

The liquid crystal microcapsule of yellow is dripped above the first transparent electrode 108 and is baked. Thereby, there is formed the second liquid crystal microcapsule layer 109 having a thickness of about 10 µm. Also at this occasion, as shown by Fig. 2C, the liquid crystal microcapsule is dripped avoiding the inner side of the insulator 106 previously formed.

Further, the second transparent electrode layer 110 is formed above the second liquid crystal microcapsule layer 109 by using a material and a method similar to those of the first transparent electrode layer 108. At this occasion, the second transparent electrode layer 110 is formed to spread over the entire pixel including the inner side of the insulator 106 previously formed. That is, the second transparent electrode layer 110 is electrically connected to the upper portion of the conductor 105a.

Next, the liquid crystal microcapsule of magenta is dripped and baked. Thereby, the third liquid crystal microcapsule layer 111 is formed. At this occasion, the third liquid crystal microcapsule layer 111 is formed not for respective pixel but over an entire face uniformly. Thereafter, the counter substrate 113 formed with the counter electrode 112 is pasted together with the third liquid crystal microcapsule layer 111. In this way, there is formed the liquid crystal display element as shown by Fig. 1.

Thereafter, the liquid crystal display element is connected to a peripheral circuit (not illustrated) to thereby finish the liquid crystal display according to the first embodiment.

According to the liquid crystal display of the first embodiment, the respective pixel is partitioned by the pixel isolator 104. By the constitution, the respective pixel is independent from any adjacent pixel. That is, the pixel electrode 102, the first transparent electrode 108 and the second transparent electrode 110 are completely isolated from an adjacent pixels by the pixel isolator 104. Further, the first liquid crystal microcapsule layer 107 and the second liquid crystal microcapsule layer 109 sandwiched thereby are also isolated from any adjacent pixel. Therefore, desired voltage can be applied to the pixel without being influenced by a signal applied to an adjacent pixel.

Further, the pixel is partitioned previously by the pixel isolator 104 and therefore, even when three colors of the liquid crystal microcapsule layers are formed, there is no need of positioning. That is, accurate positioning for coating processes is not necessary. Thereby, accuracy of coating is remarkably improved in each one pixel. By such constitution, the liquid crystal display having high aperture ratio can easily be realized. Further, nonuniformity of color caused by positional shift can be prevented.

Further, according to the embodiment, the pixel isolator 104 and the insulator 106 are formed of a photo sensitive resist. When the pixel isolator 104 and the insulator 106 are formed by resin in this way, surface treatment of the resin is facilitated. For example, by forming the pixel isolator 104 and the insulator 106 and thereafter subjecting these to fluorine plasma processing, water repellency of surfaces of these can selectively be improved. By p improving the water repellency, meniscuses formed at interfaces between the liquid crystal microcapsule layers and the respective transparent electrode layers, and surface of the resin can be restrained.

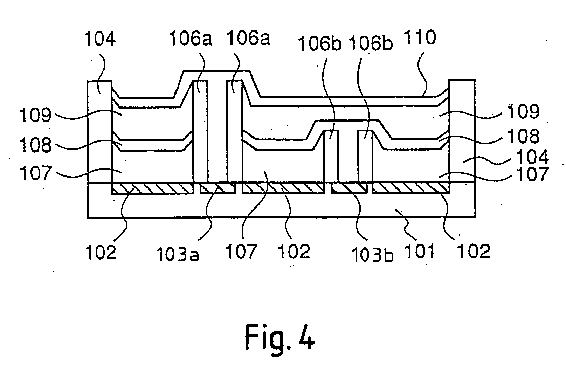

Next, a second embodiment is shown in Fig. 4.

The embodiment is a structure in which conductor columns are not used.

Similar to the first embodiment, the pixel electrode 102 and the connection electrodes 103a and 103b are arranged above the substrate 101. Further, switch elements and wirings are provided in or on the substrate 101 although illustration thereof is omitted. Further, respective pixel is partitioned by the pixel isolator 104. Further, a long insulator 106a and a short insulator 106b are provided above the connection electrodes 103a and 103b in the pixel. For example, the long insulator 106a is provided with a height of about 20 µm and the short insulator 106b is provided with a height of about 10 µm.

Further, similar to the first embodiment, the first transparent electrode 108 and the second transparent electrode 110 are formed. However, when the first transparent electrode is formed, inside of the short insulator 106b is filled with a material of the transparent electrode. Thereby, the connection electrode 103b and the first transparent electrode 108 are electrically con nected. Further, when the second transparent electrode is formed, inside of the long insulator 106a is filled with a material of the transparent electrode. Thereby, the connection electrode 103a and the second transparent electrode 110 are electrically con nected.

The other portions are formed similar to those of the first embodiment.

Also according to the second embodiment, there can be realized subtractive color mixture having a high light utilizing efficiency by the structure laminated with three layers of the liquid crystal layers in the thickness direction.

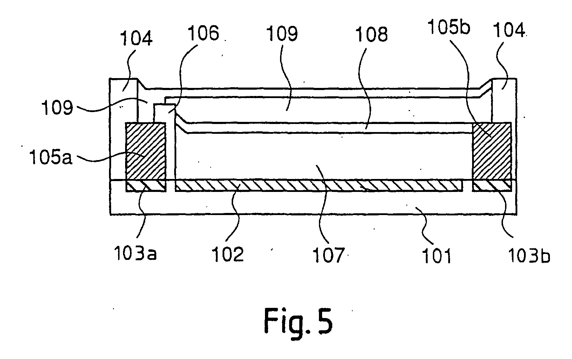

Next, an explanation will be given of a third embodiment in reference to Fig. 5.

According to the embodiment, the positions of 'the conductor columns 105a and 105b differ from those in the first embodiment.

Also according to the embodiment, similar to the first embodiment, the pixel electrode 102 and the connection electrodes 103a and 103b are provided on the substrate 101. However, the connection electrodes 103a and 103b are disposed at end portions of the pixel and provided at positions adjacent to the pixel isolator 104. Further, switch elements and wirings are provided in or on the substrate 101 although illustration thereof is omitted. Instead, reference is made to the above description of other embodiments. Further, the respective pixel is partitioned by the pixel isolator 104. Further, the insulator 106 is provided on the connection electrode 103a in the pixel. The height of the insulator 106 is lower than a height of the pixel isolator 104 and is a height of, for example, about 15 µm.

The other constitution may be formed similar to that of the first embodiment.

According to the constitution, positions of the conductor columns are arranged at the end portions of the pixel and therefore, the aperture ratio of the pixel can be improved. Further, when the liquid crystal microcapsule layers are formed, the liquid crystal microcapsules are easy to drip avoiding the pixel isolator 104 and the liquid crystal display can be manufactured with excellent yield.

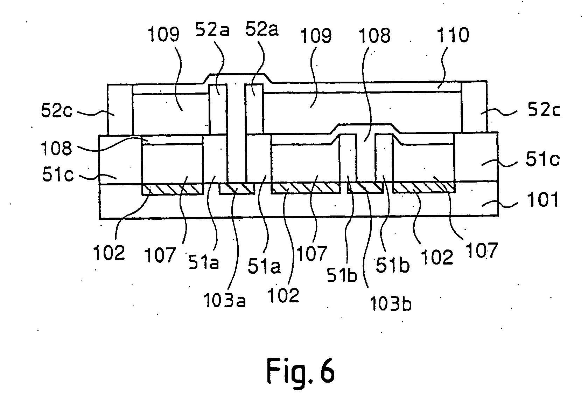

Next, an explanation will be given of a fourth embodiment in reference to Fig. 6.

According to the embodiment, a structure of an insulator differs from that in the first embodiment. Also according to the embodiment, similar to the first embodiment, the pixel electrode 102 and the connection electrodes 103 are provided on the substrate 101.

A first pixel isolator 51c is formed surrounding apixel and first insulators 51a and 51b are formed surrounding or partlyon the connection electrodes 103a and 103b. According to the embodiment, the first pixel isolator 51c and the first insulators 51a and 51b can be formed simultaneously by one step . Heights of the insulators 51a and 51b and the first pixel isolator 51c are set to, for example, about 10 µm.

After forming the first insulators 51a, 51b and 51c, similar to the first embodiment, the first liquid crystal microcapsule layer 107 is formed avoiding inner portions of the first insulators 51a and 51b.

Further, the first transparent electrode 108 is formed above the first liquid crystal microcapsule. At this occasion, similar to the second embodiment, the material of the transparent electrode fills the inner portion of the first insulator 51b to thereby electrically connect with the connection electrode 103.

Thereafter, a second insulator 52a is formed on the first insulator 51a and a second pixel isolator 52c is formed on the first pixel isolator 51c. The second insulator 52a and the second pixel isolator 52c can simultaneously be formed. In this case, the height of the first insulator 51a and the second insulator 52a together may be set to about 20 µm. Further, thicknesses of the first insulator 51a and the first pixel isolator 51c are formed such that the second insulator 52a and the second pixel isolator 52c can be formed thereabove. For example, the thicknesses of isolators 51a and 51c may be about 14 µm and the thicknesses of the second insulator 52a and the second pixel isolator 52c may be, for example, about 8 µm.

The other constitution may be formed similar to that of the first embodiment.

Also according to the embodiment, similar to the first embodiment, the respective pixel is isolated and therefore, the pixel can be driven regardless of voltage applied on a peripheral pixel. Further, according to the embodiment, steps of forming the insulators and the pixel isolator can be simplified.

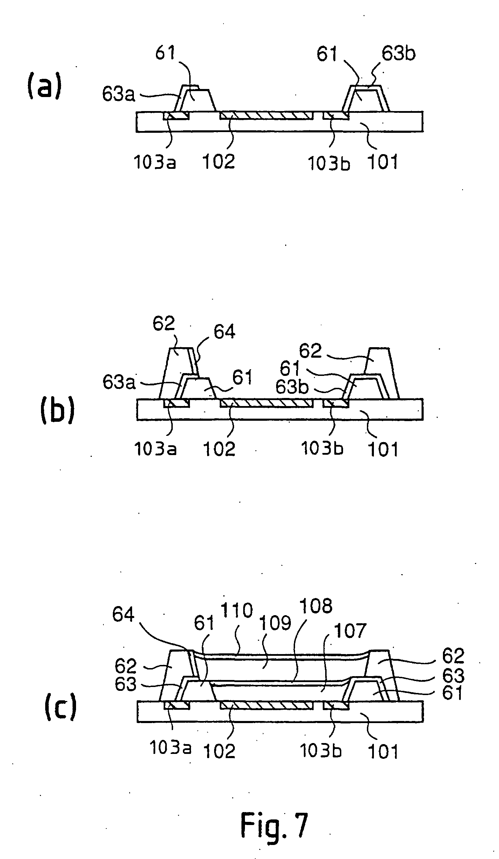

Next, an explanation will be given of a fifth embodiment in reference to Figs. 7A, 7B and 7C. Figs. 7A, 7B and 7C are partial sectional views showing a pixel. In explaining the embodiment, an explanation will be given centering on a point different from that of the first embodiment.

The pixel electrode 102 and the connection electrodes 103a and 103b are provided on the substrate 101. Further, there are formed switch elements and wirings connected to the pixel electrode 102 and the connection electrodes 103 although illustration thereof is omitted.Instead, reference is made to the above description of other embodiments

As shown by Fig. 7A, a first insulator 61 is formed by using a photosensitive resist to surround a pixel. At this stage, the height thereof is set to about 10 µm. Further, connection electrode 103b is disposed positioned at least partly within the area defined by the insulator 61 and connection electrode 103a is positioned at least partly outside of the area defined by the insulator 61.

First conductors 63a and 63b are formed at vicinities of the connection electrodes 103a and 103b on the insulator 61. The first conductors 63a and 63b are formed with, for example, Al, ITO or the like over entire faces thereof by using a sputtering method or a vacuum film forming method. Thereafter, the first conductors 63a and 63b are made to remain only at vicinities of the connection electrodes 103a and 103b by coating a resist thereon and exposing and developing these. In this case, the first conductor 63a is formed only at an side portion of the isolator 61 such that the first conductor 63a is electrically connected to the connection electrode 103a on the outer side of the first insulator 61. The second conductor 63b is electrically connected to the connection electrode 103b on the inner side of the first insulator 61.

Next, as shown by Fig. 7B, a second insulator 62 is formed on the first insulator 61 with shifting the centers of the first and second insulators.In this case, also the second insulator is also formed to surround the pixel. A height of the second insulator 62 from the substrate 101 is, for example, about 20 µm.

A second conductor 64 is provided partially above the second insulator 62 and is electrically connected to the first conductor 63a.

Next, there is formed the liquid crystal microcapsule layer 107 having a height the same as that of the first insulator 61. A thickness of the first liquid crystal microcapsule layer 107 is set to, for example, about 8 µm.

The first transparent electrode 108 is provided above the first liquid crystal microcapsule layer 107. Atthis stage, the first transparent electrode 108 is electrically connected to the first conductor 63.

Further, there is formed the second liquid crystal microcapsule layer 109 having a height the same as that of the second insulator 62 above the first transparent electrode 108. Also a thickness of the second liquid crystal microcapsule layer 109 is set to, for example, about 8 µm.

The second transparent electrode 110 is formed above the second liquid crystal microcapsule layer 109. In this case, the second transparent electrode 110 is electrically connected to the second conductor 64.

By such constitution, the first transparent electrode and the second transparent electrode are respectively connected to the connection electrode 103.

Although an explanation has been given here of an example of forming the first liquid crystal microcapsule layer 107 after forming the second insulator 62, the first liquid crystal microcapsule layer 107 can also be formed before forming the second insulator 62.

Further, similar to the first embodiment, the third liquid crystal microcapsule layer is formed above the second transparent electrode and the opposed substrate is arranged.

The other constitution may be formed similar to that of the first embodiment.

In this way, the liquid crystal display element can be formed without providing the conductor columns according to the first embodiment.

Similar to the first embodiment, the pixel is surrounded by the insulators and the pixel can be driven without being influenced by voltage applied to adjacent pixels. Further, according to the embodiment, the aperture ratio can be increased since the conductor columns are not provided.

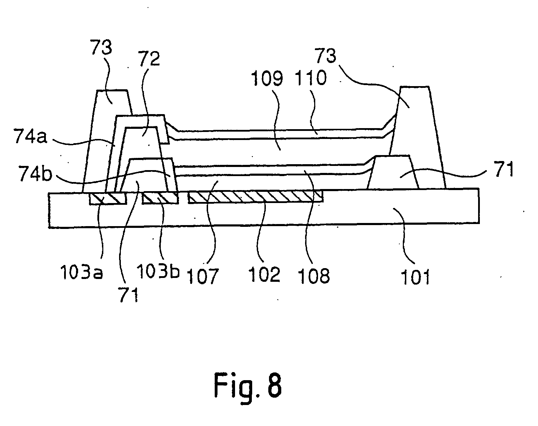

Next, an explanation will be given of a sixth embodiment in reference to Fig. 8.

According to the embodiment, as insulators surrounding a pixel, there are provided three layers of a first insulator 71, a second insulator 72 and a third insulator 73.

In Fig. 8, switch elements, wirings or the like provided on the substrate 101 are omitted. Instead, reference is made to the description above regarding the other embodiments.

Similar to the fifth embodiment, the first insulator 71 is formed to surround the pixel.

The height of the first insulator 71 is, for example, about 10 µm. In this case, the connection electrodes 103a and 103b are positioned on the inner side and the outer side of the first insulator 71.

Thereafter, there is formed a first conductor 74b connected with a portion of the first insulator 71 and connection electrode 103a on the inner side. The first conductor 74b can be formed by forming the first conductor 74b over an entire face of the first insulator 71 and patterning the first conductor 74b. Further, a conductor filmmay be formed after forming a coated film while leaving a portion of the first insulator 71 uncoated and an unnecessary portion of the conductor film may be removed along with the coated film.

Next, the second insulator 72 is formed above a portion of the first insulator 71. The height of the second insulator 72 from the substrate 101 is, for example, about 15 µm.

A second conductor 74a is formed above the second insulator 72 similar to the first conductor 74b. In this case, the second conductor 72a is insulated from the first conductor 72b.

Further, the third insulator 73 is formed to surround the pixel. The height of the third insulator 73 from the substrate 101 is, for example, about 20 µm.

Similar to the first embodiment, the first liquid crystal microcapsule layer 107 is formed by dripping the liquid crystal microcapsule. Further, the first transparent electrode 108 is formed and connected to the first conductor 74b.

The second liquid crystal microcapsule layer 109 and the second transparent electrode 110 are formed thereabove.

Although an explanation has been given here of a method of forming the liquid crystal microcapsule layer after forming the second insulator 72 and the third insulator 73, the first liquid crystal microcapsule layer 107 can also be formed after forming the first insulator 71. In this way, the order can pertinently be switched.

Thereafter, the liquid crystal display is formed by forming the third liquid crystal microcapsule layer over an entire face thereof and arranging the opposed substrate although illustration thereof is omitted.

Also according to the embodiment, there can be formed the liquid crystal display which can be driven without being influenced by voltage applied to adjacent pixels. Further, three layers of the liquid crystal microcapsule layers can be coated with excellent accuracy.

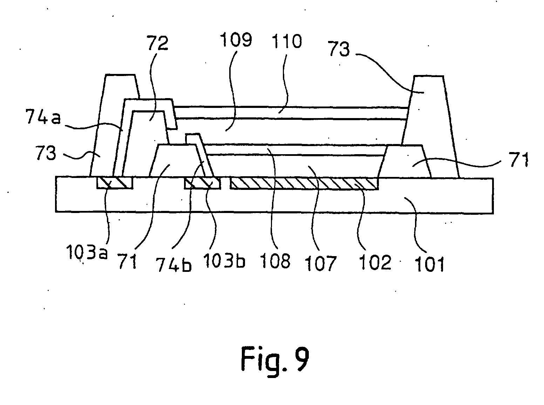

Further, positions of forming the respective insulators 71, 72 and 73 can be changed, for example, as shown by Fig. 9. Though in Fig. 8, the second insulator 72 is formed over the first insulator 71 partly, the second insulator 72 does not cover he first insulator 71 in Fig. 9. The positions are chosen based on the designs.

Further, although in explaining the above-described embodiments, an explanation has been given of the liquid crystal microcapsule layers using the liquid crystal microcapsules as the liquid crystal layers, the liquid crystal layers are not limited thereto. For example, nematic curvilinear aligned phase (NCAP) or polymer- dispersed liquid crystal (PDLC) and the like can be used. These are liquid crystal matrix composite materials including liquid crystals in solid members dispersedly supporting the liquid crystals.

As described above, there can be realized a liquid crystal display having high light utilizing efficiency, simple structure and high aperture rate and its manufacturing method.

## Claims

1. A liquid crystal display comprising a substrate (101), a pixel electrode (102) on or in said substrate, a liquid crystal layer on said pixel electrode, a common electrode (112) on said liquid crystal layer, and a counter substrate (113)on said common electrode, **characterized in that**
a pixel isolator (104; 51C, 52C; 62; 73)surrounding said pixel electrode on said substrate, said pixel isolator formed of an insulator, and said liquid crystal layer surrounded by said pixel isolator.

2. A liquid crystal display comprising a substrate (101), a pixel electrode (102)on or in said substrate, a first liquid crystal layer (107) on said pixel electrode, a first transparent electrode (108) on said first liquid crystal layer, a second liquid crystal layer (109) on said first transparent electrode, a second transparent electrode (110) on said second liquid crystal layer, a third liquid crystal layer (111) on said second transparent electrode, a common electrode (112) on said third liquid crystal layer; and a counter substrate (113)on said common electrode, **characterized by**
a pixel isolator (104; 51C, 52C; 62; 73)surrounding said pixel electrode, said pixel isolator being formed of an insulator;
a first connection electrode (103B) on or in said substrate and insulated from said pixel electrode;
a second connection electrode (103A) on or in said substrate and insulated from said pixel electrode and said first connection electrode;
said first liquid crystal layer being surrounded by said pixel isolator;
said first transparent electrode being surrounded by said pixel isolator, said first transparent electrode being connected electrically to said first connection electrode;
said second liquid crystal layer being surrounded by said pixel isolator; and
said second transparent electrode being surrounded by said pixel isolator, said second transparent electrode being connected electrically to said second connection electrode.

3. A liquid crystal display according to claim 2,
wherein one of said first liquid crystal layer (107), said second liquid crystal layer (109) and said third liquid crystal layer (111) comprise liquid crystal microcapsules.

4. A liquid crystal display according to claim 2,
wherein one of said first liquid crystal layer (107), said second liquid crystal layer (109)and said third liquid crystal layer (111) comprise liquid crystal suspended in a solid layer.

5. A liquid crystal display according to any one of claims 2 to 4, further comprising:
a pixel switch element (115)connected to said pixel electrode (102);
a first switch element (115b) connected to said first connection electrode (103b); and
a second switch element (115a)connected to said second connection electrode (103a).

6. A liquid crystal display according to any one of claims 2 to 5, further comprising:
a first conductor column (105b) provided between said first connection electrode (103b)and said first transparent electrode (108);
a second conductor column (105a)provided between said second connection electrode (103a)and said second transparent electrode (110).

7. A liquid crystal display according to claim 6,
wherein one of said first conductor column (105b) and said second conductor column (105a) touches said pixel isolator.

8. A liquid crystal display according to any one of claims 2 to 5,
wherein said pixel isolator (62; 73) has a tapered cross section.

9. A liquid crystal display according to claim 8, further comprising:
a conductor connecting between said first connection electrode (103b)and said first transparent electrode (108)or connecting between said second connection electrode (103a) and said second transparent electrode (110), said conductor provided on said pixel isolator.

10. A liquid crystal display according to any one of claims 2 to 5, 8 or 9,
wherein one of said first connection electrode and said second connection electrode is formed under said pixel isolator.

11. A liquid crystal display comprising a substrate (101), a pixel electrode (102) on or in said substrate, a first liquid crystal layer (107) on said pixel electrode, a first transparent electrode (108) on said first liquid crystal layer, a second liquid crystal layer (109) on said first transparent electrode, a second transparent electrode (110)on said second liquid crystal layer, a third liquid crystal layer (111) on said second transparent electrode, a common electrode (112)on said third liquid crystal layer, and a counter substrate (113) on said common electrode, **characterized by**
a first connection electrode (103b) formed on or in said
substrate and insulated from said pixel electrode; a second connection electrode (103a) formed on or in said substrate and insulated from said pixel electrode and said first connection electrode;
a first pixel isolator (61) surrounding said pixel electrode on said substrate, said first pixel isolator formed an insulator;
said first liquid crystal layer being surrounded by said first pixel isolator;
said first transparent electrode being surrounded by said first pixel isolator, said first transparent electrode connected electrically to said first connection electrode;
a second pixel isolator (62) formed on said first pixel isolator;
said second liquid crystal layer surrounded by said second pixel isolator;
said second transparent electrode surrounded by said second pixel isolator, said second transparent electrode connected electrically to said second connection electrode.

12. A liquid crystal display according to claim 11, further comprising:
a first conductor (63)connecting between said first connection electrode and said first transparent electrode, said first conductor provided on said first pixel isolator;
a second conductor (64) connecting between said second connection electrode and said second transparent electrode, said second conductor provided on said second pixel isolator.

13. A liquid crystal display according to claim 11, further comprising:
a first conductor (74b) connecting between said first connection electrode and said first transparent electrode, said first conductor provided on said first pixel isolator; an insulator (72) provided between said first pixel isolator and said second pixel isolator;
a second conductor (74a) connecting between said second connection electrode and said second transparent electrode, said second conductor provided on said insulator.

14. A liquid crystal display according to claim 11,
wherein said first pixel insulator (61) is formed between said first connection electrode (103b) and said second connection electrode (103a).

15. A liquid crystal display comprising a substrate (101), a pixel electrode (102) on or in said substrate, a pixel isolator (104; 51C, 52C; 62; 73) isolating said pixel electrode on said substrate, a first liquid crystal layer (107)on said pixel electrode, a first transparent electrode (108)on said first liquid crystal layer, a second liquid crystal layer (109)on said first transparent electrode, a second transparent electrode (110)on said second liquid crystal layer, a third liquid crystal layer (111) on said second transparent electrode, a common electrode (112)on said third liquid crystal layer, and a counter substrate (113)on said common electrode,
**characterized by**
a first connection electrode (103b) formed on or in said
substrate and insulated from said pixel electrode; a second connection electrode (103a) formed on or in said substrate and insulated from said pixel electrode and said first connection electrode;
said first liquid crystal layer being isolated by said pixel isolator;
said first transparent electrode being isolated by said pixel isolator, said first transparent electrode being connected electrically to said first connection electrode;
a second liquid crystal layer being isolated by said pixel isolator;
a second transparent electrode being isolated by said pixel isolator, said second transparent electrode connected electrically to said second connection electrode.

16. A liquid crystal display according to claim 15, further comprising:
a conductor connecting between said first connection electrode and said first transparent electrode or connecting between said second connection electrode and
said second transparent electrode, said conductor touching said pixel isolator.

17. A liquid crystal display comprising a substrate (101), a pixel electrode (102) on said substrate, a first liquid crystal layer (107)on said pixel electrode, a first transparent electrode (108)on said first liquid crystal layer, a second liquid crystal (109) layer on said first transparent electrode, a second transparent electrode (110)on said second liquid crystal layer, a third liquid crystal layer (111) on said second transparent electrode, a common electrode (112)on said third liquid crystal layer and a counter substrate (113) on said common electrode, **characterized by**
apixel isolatingmeans (104; 51c, 52c; 62; 73) for isolating pixels fromeach other;
said first liquid crystal layer being isolated by said pixel isolating means;
said first transparent electrode beingisolated by said pixel isolating means;
said second liquid crystal layer being isolated by said pixel isolating means;and
second transparent electrode beingisolated by said pixel isolating means.

18. A method for manufacturing a liquid crystal display
**characterized by**:
forming a pixel electrode (102), a first connection electrode (103b)and a second connection electrode (103a) on or ina substrate, insulated from each other;
forming apixel isolator (104; 51c, 52c; 62; 73) surrounding said pixel electrode;
forming a first liquid crystal layer (107)in said pixel isolator and on said substrate;
forming a first transparent electrode (103)on said first liquid crystal layer, said first transparent electrode connected to said first connection electrode;
forming a second liquid crystal layer (109)on said first transparent electrode; and
forming a second transparent electrode (110) on said second liquid crystal layer, said second transparent electrode connected to said second connecting electrode.
